# EUROPÄISCHE PATENTSCHRIFT

(11) **EP 2 536 555 B1**
(45) Veröffentlichungstag und Bekanntmachung des Hinweises auf die Patenterteilung: **03.07.2019**
(21) Anmeldenummer: 11704233.3
(22) Anmeldetag: 18.02.2011
(51) Int. Cl.: B30B 11/20, B30B 15/00, B30B 11/00, B30B 11/22

(54) **PELLETPRESSE**
PELLET PRESS
PRESSE À BOULETTES

(30) Priorität: 18.02.2010 US 305699 P
(43) Veröffentlichungstag der Anmeldung: 26.12.2012
(73) Patentinhaber: Bühler AG, 9240 Uzwil (CH)
(72) Erfinder: SIGNER, Walter, CH-9602 Bazenheid (CH); RÄSS, Roger, 9034 Eggersriet (CH); HERMSMEYER, Andrea, CH-9242 Oberuzwil (CH)
(74) Vertreter: Hepp Wenger Ryffel AG
(86) Internationale Anmeldenummer: PCT/EP2011/052392
(87) Internationale Veröffentlichungsnummer: WO 2011/101432

(56) Entgegenhaltungen:
- EP-A1- 0 462 705
- EP-A1- 1 039 210
- EP-A2- 0 635 344
- EP-A2- 0 773 101
- CH-A- 347 606
- CN-A- 101 332 683
- GB-A- 1 471 702
- JP-A- 54 072 261
- JP-A- 59 123 615
- US-A- 2 174 141
- US-A- 2 764 951
- US-A- 4 053 266

## Beschreibung

Die vorliegende Erfindung betrifft einen Motor für eine Pelletpresse, eine Pelletpresse, ein Verfahren zur Sicherheitsabschaltung, eine Anordnung zur Sicherheitsabschaltung, eine Türverriegelung, eine Zuführungsrutsche für eine Pelletpresse, ein Schneidmesser für eine Pelletpresse, sowie eine Vorrichtung zum Rollen- und Formwechsel.

Aus dem Stand der Technik sind Motoren zum Antreiben von Pelletpressen, Pelletpressen, Türverriegelungen sowie Zuführungsrutschen für Pelletpressen bekannt. Die Pelletpressen werden zum Verpressen von beispielsweise Futtermittel oder Holzschnitzeln zu so genannten Pellets in den verschiedensten Formen verwendet. Diese Pressen werden meist von störungsanfälligen und komplizierten Riemenantrieben mit externen Motoren angetrieben. Ausserdem weisen die Pelletpressen aufwändige Türverriegelungen auf, um einen Zugriff auf drehende und/oder sich bewegende Teile zu verhindern. Bekannte Zuführungsrutschen weisen den Nachteil auf, dass die Zuführung unstetig und ungleichmässig in den Pressenvorraum erfolgt.

Das Dokument EP-A-0773101 offenbart eine Pelletpresse mit den Merkmalen des Oberbegriffs des Anspruchs 1. Es ist Aufgabe der Erfindung, die Nachteile des Standes der Technik zu überwinden, und ein hohes Drehmoment einer Motorenwelle auf ein der Welle nachgeschaltetes Bauelement zu übertragen. Diese Aufgabe wird mit der Pelletpresse gemäss dem unabhängigen Anspruch 1 gelöst.

Erfindungsgemäß weist der Motor eine Welle auf, welche als Hohlwelle ausgebildet ist. Die Welle weist an ihrem Ende in Längsrichtung eine Zahnung auf, welche mit einer komplementären Zahnung einer entsprechenden ausgebildeten Nabe eine Passverzahnung bilden kann. Es versteht sich von selbst, dass die Zahnung auf der Welle ausserhalb des Motorgehäuses oder zumindest von aussen verbindbar angeordnet ist. Eine solche Passverzahnung ermöglicht insbesondere ein einfaches Auswechseln der Nabe, da die Nabe auf die Welle aufgeschoben werden kann und sofort einen Formschluss mit der Welle bildet. Durch geeignete Ausgestaltung der Passverzahnung kann somit auf räumlich sehr eng begrenztem Gebiet eine optimale Drehmomentübertragung gewährleistet werden. Insbesondere kann ein höheres Drehmoment übertragen werden, als dies bei einer herkömmlichen Flansch-Schraub-Verbindung in vergleichbarer Grösse möglich ist. Hier und im Folgenden wird unter dem Ende der Welle nicht das absolute Ende der Welle, sondern ein eigentlicher Endbereich der Welle verstanden. So ist es beispielsweise Denkbar, dass ausgehend vom Motorgehäuse nach der Verzahnung noch ein kurzes Wellenstück von bis zu 20 cm anschliesst, so dass die Welle nochmals ein Lager aufnehmen kann.

Die Zahnung der Welle kann Keilflanken, Kerbflanken oder Evolventenflanken aufweisen. Bevorzugt weist die Zahnung Evolventenflanken auf. Es hat sich gezeigt, dass eine Passverzahnung mit Evolventenflanken eine maximale Drehmomentübertragung ermöglicht.

Eine weitere Aufgabe der vorliegenden Erfindung besteht darin, ein hohes Drehmoment eines Antriebes einer Pelletpresse, insbesondere eines Direktantriebes einer Pelletpresse an einen Formhalter zu übertragen. Diese Aufgabe wird mit der Pelletpresse gemäss unabhängigem Anspruch 1 gelöst.

Eine erfindungsgemässe Pelletpresse weist einen Motor, insbesondere wie vorgängig beschrieben, mit einem Motorgehäuse und einem darin drehbar angeordneten Rotor auf. Der Rotor ist als Hohlwelle ausgebildet. Ausserdem weist die Pelletpresse ein Presswerk mit einer Pressform und in dieser Pressform angeordnete Pressvorrichtungen, insbesondere Pressschlitten und/oder Pressrollen, auf. Die Pressvorrichtungen sind an einer stationären Welle befestigt. Die stationäre Welle ist im als Hohlwelle ausgebildeten Rotor des Motors angeordnet. Das Presswerk weist ausserdem einen mit der Pressform wirkverbundenen Formhalter auf. Der Formhalter des Presswerkes und der Rotor des Motors sind mittels eines Verbindungsmittels so miteinander verbunden, dass eine Übertragung eines Drehmomentes des Rotors auf den Formhalter gewährleistet ist. Das Verbindungsmittel ist dabei eine Wellen-Naben-Verbindung. Eine Wellen-Naben-Verbindung kann im Vergleich zu einer bekannten Flansch-Schrauben-Verbindung wesentlich kleiner ausgestaltet werden, so dass diese Verbindung auch bei engsten Platzverhältnissen eingesetzt werden kann.

Die Wellen-Naben-Verbindung kann die Form einer Passverzahnung, insbesondere mit Keilflanken, Kerbflanken oder Evolventenflanken aufweisen. Eine bevorzugte Ausgestaltung weist Evolventenflanken, insbesondere gemäss DIN 5480-N auf, da dies eine maximale Drehmomentübertragung ermöglicht.

Es ist weiterhin vorteilhaft, eine Pelletpresse im Betrieb, insbesondere deren rotierende oder bewegende Teile abzudecken und gleichzeitig auch bei engen Platzverhältnissen einen guten Zugriff zu erlauben. Dies wird mit der Pelletpresse gemäss Anspruch 5 erreicht.

Die erfindungsgemässe Pelletpresse, insbesondere wie oben beschrieben, weist einen Motor mit einem Motorgehäuse, ein rotierendes Presswerk und ein das Presswerk und/oder den Motor abdeckendes Schutzgehäuse auf. Das Schutzgehäuse weist eine Pressentüre auf, welche den Zugang zum Presswerk ermöglicht. Die Pressentüre ist in Form einer Schiebetüre ausgestaltet, so dass auch bei engsten Verhältnissen der einfache Zugang zum Presswerk ermöglicht wird. Dadurch, dass die Pressentüre als Schiebetüre ausgestaltet ist, wird nur sehr wenig Platz zum Öffnen der Türe benötigt, so dass in einer Werkhalle die Pelletpresse nahe an einer weiteren Gerätschaft aufgestellt werden kann. Das Schutzgehäuse ist vorzugsweise so ausgestaltet, dass die Pressentüre im Innern des Schutzgehäuses oder unmittelbar aussen am Schutzgehäuse anliegend verschoben werden kann. Das Schutzgehäuse kann auch komplett durch Schiebetüren gebildet werden, was beispielsweise einen freien Zugang auf den Motor und insbesondere auf die Motorenverkabelung erlaubt.

Eine Pelletpresse mit einem Zuführungskanal kann eine im Zuführungskanal angeordnete Inspektionsklappe aufweisen, welche beispielsweise der Überprüfung der Qualität des der Pelletpresse zuzuführenden Materials dient. Eine solche Inspektionsklappe umfasst eine Frontabdeckung und zwei Seitenbleche. Diese Seitenbleche können in entsprechend ausgestaltete Schlitze des Zuführungskanals einsetzbar sein. Dabei können die Seitenbleche so genannte Seitenblechlappen aufweisen, welche ein Herausfallen der Inspektionsklappe verhindern. Ausserdem können die Seitenblechlappen ein Gewicht aufweisen, welches ein selbstständiges Verschliessen der Inspektionsklappe bewirkt. Die Seitenbleche weisen vorzugsweise an ihrer unteren Kante nahe der Frontabdeckung eine Einkerbung auf, welche zusammen mit dem entsprechenden Schlitz des Zuführungskanals ein einfaches Scharnier bilden. Die Seitenblechlappen bilden einen Anschlag für das Seitenblech beim Öffnen der Inspektionsklappe, so dass ein Herausfallen der Inspektionsklappe verhindert wird. Die Inspektionsklappe weist vorzugsweise eine Breite auf, welche in etwa der Breite des Zuführungskanals entspricht. Somit können die Seitenbleche randnah im Innern des Zuführungskanals angeordnet sein, so dass der Materialfluss im Zuführungskanal nur unwesentlich behindert wird.

Eine weitere Aufgabe der vorliegenden Erfindung besteht darin, ein Verfahren und eine Anordnung zur Verfügung zu stellen, welches eine Sicherheitsabschaltung auch in explosionsgefährdeter Atmosphäre erlaubt. Diese Aufgabe wird mit dem Verfahren gemäss Anspruch 6 und der Pelletpresse gemäß Anspruch 7 gelöst.

Ein erfindungsgemässes Verfahren zur Sicherheitsabschaltung eines elektrischen Schaltkreises, insbesondere einer Pelletpresse wie vorgängig beschrieben, umfasst die folgenden sequenziellen Schritte:
a) detektieren einer Bewegung einer im Normalbetrieb stationären Welle einer Maschine,
b) Potentialfrei-Schalten einer elektrischen Verbindung zwischen der stationären Welle und der Maschine,
c) Trennen der elektrischen Verbindung.

Dabei ist es in diesem Verfahren vorteilhaft, dass die Bewegung der im Normalbetrieb stationären Welle der Maschine möglichst frühzeitig erfasst wird. Ein entsprechender Detektor ist somit entsprechend empfindlich auszulegen. Es versteht sich von selbst, dass nicht nur die Bewegung der stationären Welle sondern auch die Bewegung eines auf der Welle angeordneten Hebels detektiert werden kann, wodurch die Empfindlichkeit nochmals verbessert wird. Eine detektierte Bewegung der im Normalbetrieb stationären Welle kann über entsprechende Signale an eine Steuerung übermittelt werden, welche bestehende elektrische Verbindungen zwischen der Welle und der Maschine potentialfrei schaltet. Elektrische Verbindungen können beispielsweise Sensorkabel sein, welche entlang der Welle ins Innere der Maschine geleitet werden sollen. Alternativ können aber auch Steuerungsleitungen oder Leitungen zur Spannungs- oder Stromversorgungen verwendet werden. Dadurch dass die elektrischen Verbindungen potentialfrei geschaltet sind, können diese Verbindungen gefahrlos getrennt werden. Ein Funkenschlag ist ausgeschlossen, was insbesondere in explosionsgefährdeten Atmosphären vorteilhaft ist.

Eine erfindungsgemässe Anordnung zur Sicherheitsabschaltung eines elektrischen Schaltkreises einer Maschine, insbesondere einer Pelletpresse wie vorgängig beschrieben, umfasst einen Detektor zum detektieren einer Bewegung einer im Normalbetrieb stationären Welle der Maschine und ein Mittel zum Potentialfrei-Schalten einer elektrischen Verbindung zwischen der stationären Welle und der Maschine. Ausserdem umfasst die Anordnung eine Vorrichtung zum Trennen der elektrischen Verbindung. Dabei ist die Vorrichtung so ausgestaltet ist, dass die elektrische Verbindung erst nach dem Potentialfrei-Schalten getrennt wird. Eine möglichst frühzeitige Erfassung der Bewegung der Welle kann durch einen empfindlichen Detektor gewährleistet werden. Auf der Welle kann beispielsweise ein Hebel angeordnet sein, welcher die Bewegung der Welle verstärkt. Somit ist die Erfassung einer Bewegung der Welle vereinfacht. Die Wahl eines empfindlichen Detektors kann mit einer entsprechenden Ausgestaltung des Hebels kombiniert werden.

Unabhängig zum erwähnten Verfahren bzw. zur Anordnung zur Sicherheitsabschaltung kann der Motorraum bzw. der Raum, gebildet durch ein den Motor abdeckendes Schutzgehäuse, einer Pelletpresse mit einem Überdruck beaufschlagt werden. Wenn die für den Überdruck benötigte Luft entsprechend gefiltert wird, kann durch diesen Überdruck sichergestellt werden, dass sich keine explosionsgefährdete Staubkonzentration in diesem Raum einstellt. Insbesondere kann verhindert werden, dass Staub aus dem Pressenraum in diesen Raum dringen kann. Eine solche Anordnung ist insbesondere in Bezug auf die ATEX-Leitlinien der Europäischen Union oder ähnliche Richtlinien vorteilhaft. Unter einem Überdruck wird insbesondere ein Druck verstanden, welcher grösser als der atmosphärische Druck der Umgebung, insbesondere grösser als der Druck im Pressraum der Pelletpresse ist. Dabei beträgt der Druckunterschied zwischen Schutzgehäuse und Pressenraum und/oder zwischen Schutzgehäuse und Umgebungsdruck mindestens 10 Pa, bevorzugt mindestens 20 Pa, besonders bevorzugt mindestens 30 Pa. Eine weitere Aufgabe der vorliegenden Erfindung besteht darin, eine Zuführungsrutsche für eine Pelletpresse zur Verfügung zustellen, welche einfach ausgestaltet und eine präzise Zuführung in den Pressenvorraum erlaubt. Diese Aufgabe wird mit der Zuführungsrutsche einer Pelletpresse gemäss Anspruch 8 gelöst.

Eine erfindungsgemässe Zuführungsrutsche einer Pelletpresse, insbesondere wie vorgängig beschrieben, für die Zuführung von zu pelletierendem Material in einen Pressenvorraum der Pelletpresse weist bei bestimmungsgemässem Gebrauch insbesondere im Endbereich der Zuführungsrutsche eine Wölbung quer zur Rutschrichtung des zu pelletierenden Material oder einen Knick in etwa der Mitte des Produktflusses entlang der Rutschrichtung auf. Dabei versteht sich von selbst, dass die Wölbung bzw. der Knick bei bestimmungsgemässem Gebrauch nach unten gerichtet sein muss. Unter einer Wölbung wird hierbei verstanden, dass die Zuführungsrutsche quer zur bestimmungsgemässen Transportrichtung eine kontinuierliche Biegung aufweist, insbesondere sind keine Knicke vorhanden. Entsprechend weist ein Schnitt durch die Zuführrutsche bei bestimmungsgemässem Gebrauch quer zur Rutschrichtung des zu pelletierenden Materials in etwa eine U-Form oder eine V-Form auf. Durch eine solche ausgestaltet Zuführungsrutsche kann gewährleistet werden, dass unabhängig von der Menge des zuzuführenden Materials, dieses immer gezielt auf einen bestimmten Punkt zugeführt werden kann. Um eine zusätzliche Fokussierung des zuzuführenden Materials auf einen Punkt zu erreichen, kann die Zuführungsrutsche ihren Querschnitt in Richtung zum Endbereich verringern. Insbesondere bei Zuführungsrutschen mit einer Wölbung, also einer rinnen- oder U-förmigen Rutsche ist dies vorteilhaft.

Eine weitere Aufgabe der vorliegenden Erfindung besteht darin, eine vorteilhafte und kräfteoptimierte Zuführungsrutsche mit Bypass-Position zur Verfügung zu stellen. Diese Aufgabe wird mit einer Zuführungsrutsche gemäss Anspruch 9 gelöst.

Eine erfindungsgemässe Zuführungsrutsche für eine Pelletpresse, welche für sich alleine oder in Kombination mit einer vorgängig beschriebenen Pelletpresse oder der vorgängig beschriebenen Zuführungsrutsche eingesetzt werden kann, dient der Zuführung von zu pelletierendem Material durch eine Öffnung in einen Pressenvorraum einer Pelletpresse. Dabei ist die Zuführungsrutsche in einem Zuführungskanal der Pelletpresse und an einem Drehgelenk angeordnet, so dass die Zuführungsrutsche aus einer ersten Position in eine Bypass-Position verschwenkbar ist. In der ersten Position leitet die Zuführungsrutsche das durch den Zuführungskanal geförderte Material in den Pressenvorraum der Pelletpresse. In der Bypass-Position wird die Öffnung zum Pressenvorraum durch die Zuführungsrutsche so verschlossen, dass das Material aus dem Zuführungskanal an dieser Öffnung vorbei geleitet wird. Das Drehgelenk ist dabei im mittleren Drittel in Bezug auf die Längenausdehnung in Rutschrichtung der Zuführungsrutsche angeordnet. Durch die in etwa mittige Anordnung des Drehgelenkes wird für das Verschwenken nur ein Bruchteil der Kraft benötigt, welche bei üblicher randseitiger Anordnung des Drehgelenkes benötigt wird. Es versteht sich von selbst, dass sich bei einer solchen Anordnung das Drehgelenk auch in etwa mittig im Zuführungskanal befindet. Eine entsprechende Halterung für die Aufnahme des Drehgelenkes im Zuführungskanal kann beispielsweise mittels einer durchgehenden Stange, welche quer durch den Zuführungskanal verläuft, erreicht werden. Eine solche Stange erlaubt auch ein einfaches Verschwenken der Zuführungsrutsche von ausserhalb des Zuführungskanals. Es versteht sich von selbst, dass auch andere Befestigungsmöglichkeiten denkbar sind, insbesondere Wellenstummel, welche beidseitig an der Zuführungsrutsche angeordnet sind, und eine Drehverbindung mit dem Zuführungskanal ermöglichen. Somit wird der Materialfluss in der Bypass-Position nicht unnötig behindert.

Eine weitere Aufgabe der vorliegenden Erfindung besteht darin, eine Türverriegelung, insbesondere für eine Pelletpresse zur Verfügung zu stellen, welche gewährleistet, dass eine Öffnung einer Türe nur bei stehender Welle erlaubt. Diese Aufgabe wird mit der Vorrichtung gemäss Anspruch 10 gelöst.

Eine erfindungsgemässe Türverriegelung für eine Pelletpresse, insbesondere wie vorgängig beschrieben, mit einem Motor und einer Welle umfasst ein mechanisches Verriegelungsmittel und ein elektromechanisches Verriegelungsmittel. Das mechanische Verriegelungsmittel ist dabei durch das elektromechnaische Verriegelungsmittel gesperrt, solange sich die Welle des Motors der Pelletpresse dreht bzw. noch nicht stillsteht. Es versteht sich von selbst, dass damit die Drehbewegung der Welle überwacht werden muss. Dem Fachmann sind hierzu hinreichend Lösungen bekannt, so dass dies nicht näher erläutert wird. Beispielsweise kann das mechanische Verriegelungsmittel ein konventioneller Riegel sein, welcher in ein komplementäre Ausnehmung eingreift. Andere mechanische Verriegelungsmittel sind auch denkbar. Das elektromechanische Verriegelungsmittel kann beispielsweise ein Elektromagnet sein, welches das mechanische Verriegelungsmittel, beispielsweise den Riegel, durch seine Magnetkraft blockiert und bei Bedarf wieder freigibt. Unter einem elektromechanischen Verriegelungsmittel wird beispielsweise auch ein Stellmotor verstanden. Ein solcher Stellmotor kann beispielsweise mit einem Bolzen die Bewegung des mechanischen Verriegelungsmittels blockieren und wieder freigeben. Ebenso kann eine automatische Verrieglung durch einen mittels einer Feder vorgespannten Bolzen erfolgen. Dieser Bolzen kann dann beispielsweise durch einen Elektromagneten oder einen Stellmotor aus der der Verriegelungsstellung bewegt werden. Die Verriegelung durch den Bolzen muss also aktiv freigegeben werden. Eine solche automatische Verriegelung hat den Vorteil, dass selbst bei Verlust einer Versorgungsspannung für den Elektromagneten oder den Stellmotor immer gewährleistet ist, dass die Türe verriegelt ist. Durch die Verwendung des elektrischen Verriegelungsmittels kann sichergestellt werden, dass eine Schutzabdeckung oder ein Türe für Wartungszwecke nur geöffnet werden kann, wenn die Pelletpresse steht, bzw. deren Welle sich nicht mehr dreht. Somit ist eine Verletzungsgefahr durch drehende und/oder bewegende Teile ausgeschlossen.

Die Türverriegelung kann einen Detektor zum Detektieren des Zustandes des mechanischen Verriegelungsmittels umfassen. Dadurch kann beispielsweise sichergestellt werden, dass der Motor der Pelletpresse nur betrieben werden kann, wenn die Türverriegelung korrekt verschlossen bzw. das mechanische Verriegelungsmittel geschlossen und/oder durch das elektrische Verriegelungsmittel gesperrt ist. Dass der Detektor mit einer entsprechenden Schaltung der Pelletpresse verbunden werden muss, versteht sich von selbst. Der Detektor kann dabei ein separates Bauteil sein oder direkt im elektrischen Verriegelungsmittel integriert sein.

Eine erfindungsgemässe Pelletpresse weist eine Türe und eine vorgängig beschriebene Türverriegelung auf. Solange das mechanische Verriegelungsmittel noch offen ist oder nicht durch das elektrische Verriegelungsmittel gesperrt ist, ist der Motor der Pelletpresse gesperrt.

Eine weitere Aufgabe der vorliegenden Erfindung besteht darin, ein Schneidmesser für eine Pelletpresse zur Verfügung zu stellen, welches übermässigen Verschleiss und insbesondere den rechtzeitigen Ersatz anzeigt. Diese Aufgabe wird mit einem Schneidmesser gemäss Anspruch 12 gelöst.

Ein erfindungsgemässes Schneidmesser für eine Pelletpresse, beispielsweise für eine Pelletpresse wie vorgängig beschrieben, weist eine Messerbasis und mindestens eine Klinge mit einer Schneidkante auf. Dabei weist die Klinge einen Verschleissindikator auf, welcher den Verschleiss der Klinge anzeigt. Bei bestimmungsgemässem Gebrauch wird das Schneidmesser über die Pressform der Pelletpresse geführt und schneidet mit ihrer Klinge das verpresste Material, welches aus den Bohrungen der Pressform herausgedrückt wird zu Pellets. Da sich die Klinge bei solchen Schneidoperationen abnutzt versteht sich von selbst. Bis anhin war es einem Operateur nur schwer möglich, den Verschleiss der Klinge zu quantifizieren und entsprechend den Ersatz des Schneidmessers zu planen. Durch den Verschleissindikator auf der Klinge kann ein Operateur jedoch einfach erkennen, ob das Schneidmesser noch zu gebrauchen ist oder gegebenenfalls ausgewechselt werden muss. Bei Schneidmessern mit zwei Klingen kann gegebenenfalls bei Verschleiss der ersten Klinge auch die zweite Klinge zum Einsatz kommen, so dass das Schneidmesser erst zu einem späteren Zeitpunkt ausgewechselt werden muss.

Der Verschleissindikator kann durch einen stumpfen Winkel von zwischen 105° und 175°, bevorzugt zwischen 120° und 160°, besonders bevorzugt zwischen 135° und 145°, zwischen der Klinge und Messerbasis gebildet sein. Dabei ist dieser Winkel verständlicherweise auf einer Aussenseite des Schneidmessers, also auf der bei bestimmungsgemässem Gebrauch der Pressform abgewandten Seite angeordnet. Ebenso ist es auch denkbar, dass der Verschleissindikator durch eine Kerbe, einen Wulst oder durch eine rein optische Markierung, beispielsweise eine Lasergravur gebildet wird.

Eine weitere Aufgabe der vorliegenden Erfindung besteht darin, eine Vorrichtung zum einfachen Rollen- und Formwechsel bei einer Pelletpresse zur Verfügung zu stellen.

Eine erfindungsgemässe Vorrichtung zum Rollen- und Formwechsel einer Pelletpresse, insbesondere einer Pelletpresse wie vorgängig beschrieben, weist wenigstens einen Träger mit einer Laufkatze und wenigstens ein Stützelement zum Abstützen am Boden auf. Der Träger ist dabei auf der einen Seite auf dem Stützelement und auf der anderen Seite mittels einer Abstützung direkt auf der Pelletpresse befestigt oder befestigbar. Durch diese Konstruktion mit Stützelement und Abstützung direkt auf der Pelletpresse kann auf eine aufwändige Mechanik verzichtet werden. Ausserdem braucht nicht jede einzelne Pelletpresse über eine eigene Wechselvorrichtung zu verfügen, es kann eine einzelne Vorrichtung für mehrere Pelletpressen verwendet werden. Insbesondere wenn die Befestigung des Trägers am Stützelement in der Höhe verstellbar ausgebildet ist, können auch Pelletpressen mit verschiedenen Pressformdurchmessern, bzw. verschieden dimensionierte Pelletpressen mit derselben Vorrichtung zum Rollen- oder Formwechsel versehen werden.

Die Abstützung kann an einer Frontplatte der Pelletpresse befestigt oder befestigbar sein. Moderne Pelletpressen sind mit sehr robusten Frontplatten ausgestaltet, da diese Frontplatten das gesamte Gewicht sowohl der Pressform und der Pressrollen als auch des Motors tragen. Ein Abstützen des Trägers auf der Frontplatte bringt somit nicht nur die benötigte Kraftaufnahme sondern auch die für einen Rollen- oder Formwechsel benötigte Stabilität mit sich. Die Abstützung kann dabei ein Adapter sein, welche die sichere Verbindung zwischen Träger und Frontplatte sicherstellt.

Anhand von Figuren, welche lediglich Ausführungsbeispiele darstellen, wird die Erfindung im Folgenden näher erläutert. Es zeigen:
- **Figur 1:**: eine Ansicht eines Motors,
- **Figur 2:**: eine schematische Darstellung verschiedener Passverzahnungen,
- **Figur 3:**: eine schematische Darstellung einer erfindungsgemässen Pelletpresse in einer ersten Ausführungsform,
- **Figur 4:**: eine Ansicht auf eine weitere Ausführungsform einer erfindungsgemässen Pelletpresse mit geschlossenen Schiebetüren,
- **Figur 5a:**: eine erste schematische Darstellung einer Anordnung zur Sicherheitsabschaltung,
- **Figur 5b:**: eine weitere schematische Darstellung einer Anordnung zur Sicherheitsabschaltung,
- **Figur 6a:**: eine schematisch Darstellung einer erfindungsgemässen Zuführrutsche in einer ersten Ausführungsform,
- **Figur 6b:**: eine schematisch Darstellung einer weiteren Ausführungsform einer erfindungsgemässen Zuführrutsche,
- **Figur 7a:**: eine schematische Darstellung einer erfindungsgemässe Türverriegelung,
- **Figur 7b:**: eine Ansicht einer erfindungsgemässen Türverriegelung in einer anderen Ausführungsform,
- **Figur 8:**: eine Detailansicht auf eine Zuführungskanal mit Fokus auf eine Inspektionsklappe,
- **Figur 9a:**: eine Ansicht einer erfindungsgemässen Zuführungsrutsche angeordnet in einem Zuführungskanal einer Pelletpresse,
- **Figur 9b:**: einen Querschnitt durch die Zuführungsrutsche gemäss Figur 9a,
- **Figur 9c:**: den Querschnitt gemäss Figur 9b, wobei sich die Zuführungsrutsche in einer Bypass-Position befindet,
- **Figur 10:**: eine Ansicht auf eine Pressentüre einer Pelletpresse,
- **Figur 11a:**: einen Querschnitt durch ein erfindungsgemässes Schneidmesser,
- **Figur 11b:**: eine Ansicht auf das Messer gemäss Figur 11a mit einem Messerhalter,
- **Figur 12:**: eine Ansicht einer erfindungsgemässen Vorrichtung zum Rollen- und Formwechsel.

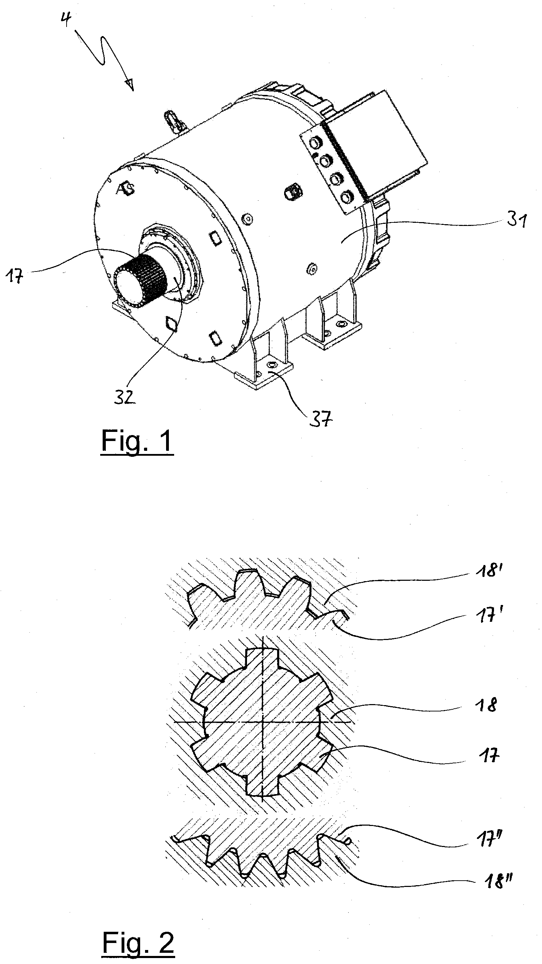

**Figur** 1 zeigt eine Ansicht eines erfindungsgemässen Motors 4 mit seinem Motorengehäuse 31 und einer als Hohlwelle ausgestalteten Welle 32. Das Ende der Welle 32 weist eine Zahnung 17 auf, welches mit einer komplementären Zahnung 18 (siehe Figur 2) einer Nabe eine Passverzahnung bilden kann. Die gezeigte Zahnung weist Evolventenflanken auf.

**Figur** 2 zeigt eine schematische Darstellung verschiedener Passverzahnungen. Mittig angeordnet ist einen Passverzahnung mit Keilflanken, wobei eine Welle mit der Zahnung 17 im Querschnitt ganz und eine Nabe mit ihrer Zahnung 18 nur teilweise dargestellt ist.

Eine weitere Welle mit Zahnung 17' mit einer komplementären Nabe mit Zahnung 18' ist nur ausschnittsweise dargestellt. Die Zahnungen 17', 18' weisen Evolventenflanken auf.

Eine dritte Welle mit Zahnung 17" mit einer komplementären Nabe mit Zahnung 18" ist ebenfalls nur ausschnittsweise dargestellt. Die Zahnungen 17", 18" weisen Kerbflanken auf.

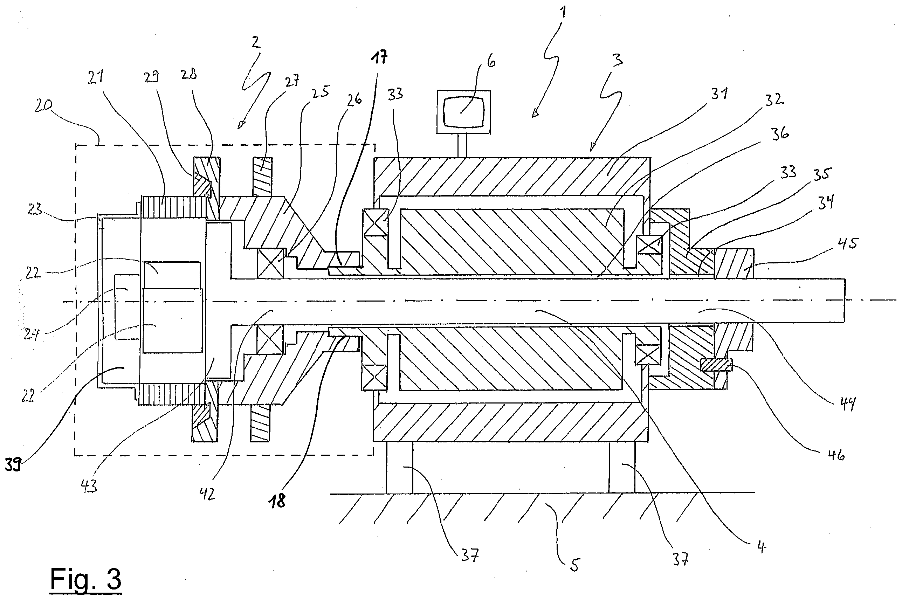

**Figur 3** zeigt eine schematische Darstellung einer erfindungsgemässen Pelletpresse 1. Die Pelletpresse 1 besteht im Wesentlichen aus einem Presswerk 2 und einem Motor 3.

Das Presswerk 2 umfasst eine Pressform 21, welche von einem Formhalter 25 aufgenommen wird. Die Pressform 21 ist dabei in bekannter Art mit Klemmsegmenten 29 an einem Tragring 28 befestigt, welcher sich am Formhalter 25 befindet. Zum vereinfachten Lösen der Pressform 21 vom Formhalter 25 bzw. vom Tragring 28 wird in bekannter Art ein Luftkissenelement 27 verwendet. Das Luftkissenelement 27 ist nur angedeutet. Alternativ können Pressform 21, Tragring 28 und Formhalter 25 direkt verschraubt werden.

In der Pressform 21 sind zwei Pressrollen 22 angeordnet, welche das zu pelletierende Gut durch Löcher der rotierenden Pressform 21 pressen. Die Pressrollen 22 sind an einer Pressraumscheibe 43 an einem vorderen Ende 42 einer stationären Welle 4 befestigt. Die stationäre Welle 4 ist an ihrem vorderen Ende 42 durch ein Wellenlager 26 im Formhalter 25 abgestützt. Durch den Rollenversteller 24 lassen sich die Pressrollen 22, insbesondere deren Abstand zur Pressform 21, vor und/oder während des Betriebes manuell oder automatisch verstellen.

Ein Formdeckel 23 mit einer Öffnung erlaubt das Einbringen von zu pelletierendem Material in den Pressenvorraum 39. Eine Pressentüre 20 kann das Presswerk 2 abschliessen, so dass keine Verletzungsgefahr für in der Umgebung der Pelletpresse 1 arbeitende Personen besteht.

Der Motor 3 entspricht im Wesentlichen einem konventionellen Drehstrom-Synchronmotor und weist ein Motorgehäuse 31 auf, welches einen Rotor 32 aufnimmt. Der Rotor 32 wird innerhalb Motorgehäuses 31 mit zwei Motorenlager 33 gelagert, so dass dieser leicht drehen kann. Der Rotor 32 weist eine zentrale Bohrung 36 auf, durch welche die statische Welle 4 hindurchgeführt wird. Der Motor 3 ist an seinem dem Presswerk 2 gegenüberliegenden Ende mit einem Abschlussdeckel 35 versehen, welcher eine Öffnung zur Befestigung eines Notlagers 34 und darin gelagert der stationären Welle 4 aufweist. Das Notlager ist als Gleitlager ausgebildet und besteht aus einer Messing- oder Bronzehülse. Andere Materialien sind ebenfalls denkbar. Der Abschlussdeckel 35 verhindert das Eindringen von Staub und Schmutz in den Motorinnenraum. Das Motorgehäuse 31 weist auf seiner unteren Seite Standfüsse 37 auf, mit welchen der Motor 3 und somit die Pelletpresse 1 am Boden oder an einer Grundplatte 5 montiert werden kann.

Das Presswerk 2 ist direkt über den Formhalter 25 mit dem Motor 3, bzw. mit dem Rotor 32 des Motors 3 verbunden. Dabei ist der Formhalter 25 über eine Passverzahnung 17, 18 mit dem Rotor 32 verbunden. Die Zahnungen 17, 18 des Formhalters 25 sowie des Rotors 32 sind mit Evolventenflanken ausgebildet. Durch diese Passverzahnung 17, 18 erübrigen sich komplizierte Verbindungsmittel oder Keilriemen. Insbesondere sind dadurch hohe Drehmomente übertragbar. Ausserdem ist das Motorenlager 33 somit einfach zugänglich für Wartungszwecke. Eine Anpassung des Formhalters 25 an verschieden ausgebildete Pressformen 21 kann mittels verschieden ausgebildeten Tragringen 28 und entsprechenden Klemmsegmenten 29 erreicht werden.

An der zentralen Welle 4 ist eine Bolzenhalter 45 befestigt. Ein Brechbolzen 46 verbindet den Bolzenhalter mit dem Abschlussdeckel 35 des Motors 3. Alternativ kann der Brechbolzen 46 auch direkt mit der stationären Welle 4 verbunden sein und in einen entsprechend ausgestalteten Abschlussdeckel 35 des Motors 3 eingreifen. Die Platzierung des Brechbolzens 46 zwischen einem Bolzenhalter 45 und einer Grundplatte 5 ist ebenfalls denkbar.

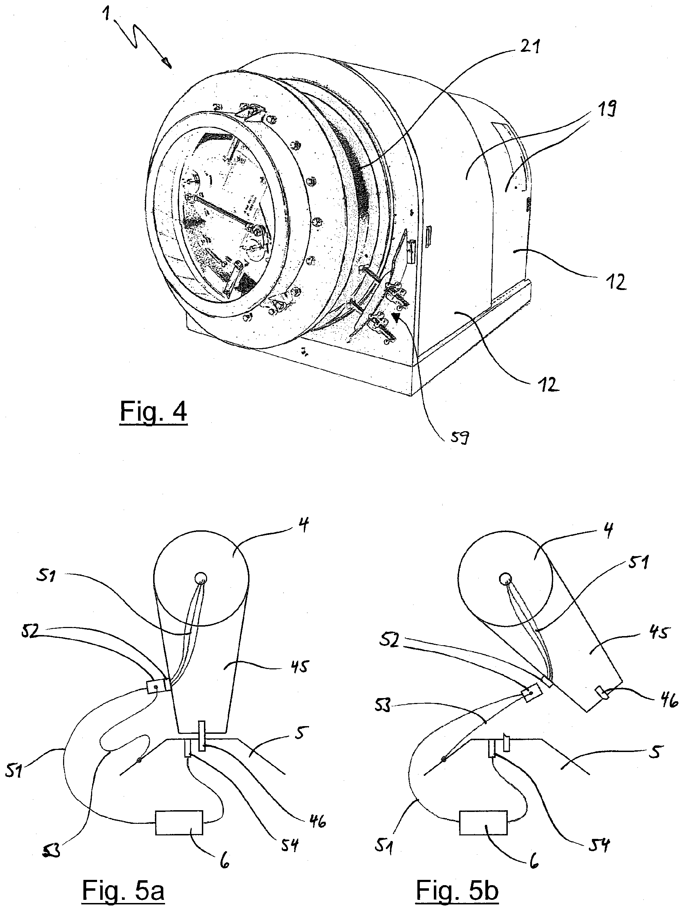

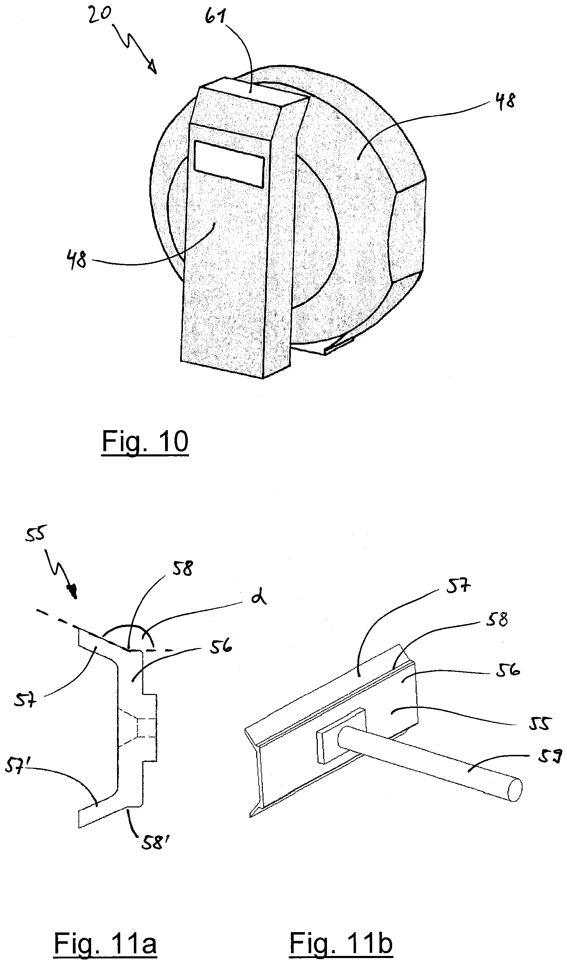

**Figur 4** zeigt eine Ansicht auf eine weitere Ausführungsform einer erfindungsgemässen Pelletpresse 1, wobei die Pelletpresse 1 eine Abdeckung 19 aufweist. Die Abdeckung 19 besteht im vorliegenden Fall im Wesentlichen aus Schiebetüren 12, welche auf parallelen Schienen verlaufen, so dass diese übereinander geschoben werden können. Im gezeigten Ausführungsbeispiel ist die rotierenden Pressform 21 nicht abgedeckt. Entsprechend sind zwei Messerhalter 59 erkennbar, welche je ein Messer 55 (siehe Figur 11) über die Pressform 21 führen und somit die Pellets schneiden. Es ist jedoch denkbar, dass mit Schiebetüren, welche ähnlich zu den Schiebetüren 12 sind, auch das Presswerk abgedeckt wird. Alternativ kann das Presswerk auch durch eine Pressentüre 20 (siehe Figur 3 und 10) abgedeckt werden.

Die **Figuren 5a und 5b** zeigen je in einer schematischen Darstellung eine Anordnung zur Sicherheitsabschaltung eines elektrischen Schaltkreises. Dabei besteht der vereinfacht dargestellte Schaltkreis aus einer Steuerungseinheit 6, einer elektrischen Verbindung zwischen Steuereinheit 6 bzw. der Maschine und einem nicht dargestellten Sensor, welcher an einer stationären Welle 4 angeordnet ist und einer Steckverbindung. Die stationäre Welle 4 ist über einen Brechbolzenhebel 45 und einen Brechbolzen 46 mit einer Grundplatte 5 der Maschine verbunden. Im Falle eines technischen Defektes kann ein Drehmoment auf die stationäre Welle 4 einwirken. Wenn das Drehmoment einen vorbestimmten Wert überschreitet, bricht der Brechbolzen 45 und der Brechbolzenhebel 46 wird ausgelenkt (vgl. Figur 5b). Ein Detektor 54 erkennt die Bewegung des Brechbolzenhebels 46 und meldet dies der Steuerungseinheit 6. Diese Steuerungseinheit 6 schaltet nun die elektrische Verbindung 51 potentialfrei, so dass beim Trennen der Steckverbindung 52 kein Funkenschlag auftritt. An der Steckverbindung 52 ist ein Ausreissseil 53 befestigt. Dieses Ausreissseil 53 ist ebenfalls an der Grundplatte 5 oder dem Maschinengehäuse fest angebracht. Die Länge des Ausreissseils 53 ist so bemessen, dass bei einer Auslenkung des Brechbolzenhebels 45 genügend Zeit verbleibt, um die elektrische Verbindung 51 potentialfrei zu schalten bevor das Ausreissseil 53 gestreckt ist und die Steckverbindung 52 trennt.

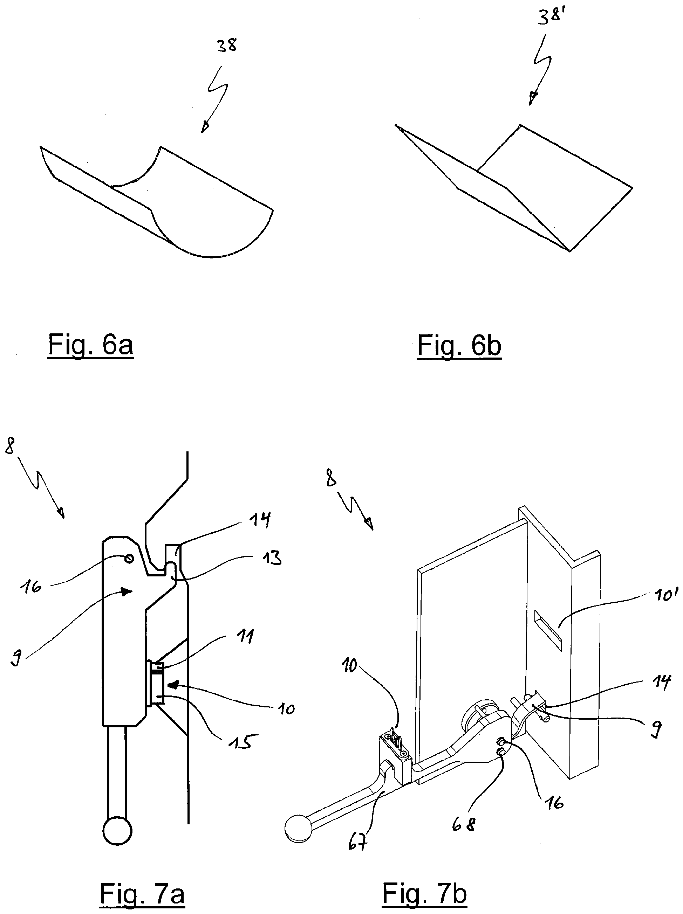

Die **Figuren 6a und 6b** zeigen je eine schematisch Darstellung einer erfindungsgemässen Zuführrutsche 38, 38' in zwei verschiedenen Ausführungsformen. Die Zuführrutsche 38 fokussiert durch die rinnenförmige Wölbung das zu pelletierende Material so dass dieses gezielt in den Pressenvorraum einer Pelletpresse eingebracht werden kann. Die rinnenförmige Wölbung der Zuführrutsche 38 weist dabei keine Knicke in der Rinne auf. Analog zur Zuführungsrutsche 38 fokussiert auch die Zuführrutsche 38' das zu pelletierende Material. Dabei weist jedoch die Zuführrutsche 38' bewusst einen in etwa zentralen Knick auf, so dass insbesondere bei nur geringem Zuführungsstrom eine optimale Fokussierung stattfindet.

**Figur 7a** zeigt eine schematische Darstellung einer erfindungsgemässen Türverriegelung 8. Die Türverriegelung 8 besteht dabei aus einem mechanischen Verriegelungsmittel 9 mit einem Riegel 13 und einem elektrischen Verriegelungsmittel 10 mit einem Elektromagneten 15. Bei geschlossenem mechanischen Verriegelungsmittel 9 greift der Riegel 13 in eine Ausnehmung 14 und verriegelt so eine Türe beispielsweise einer Pelletpresse. Wenn die Pelletpresse in Betrieb ist, dann wird das elektrische Verriegelungsmittel 10 angesteuert und der Elektromagnet 15 fixiert das mechanische Verriegelungsmittel 9 in seiner geschlossenen Position. Durch eine geeignete Steuerung kann sichergestellt werden, dass sich der Elektromagnet 15 erst löst, wenn der Motor bzw. die Welle der Pelletpresse still steht und die entsprechende Türe gefahrlos geöffnet werden kann. Ein Detektor 11, welcher integraler Bestandteil des elektrischen Verriegelungsmittels 10 ist, erkennt die Stellung des mechanischen Verriegelungsmittels 9, so dass die Pelletpresse bei nicht korrekt verschlossener Türe, bzw. bei nicht korrekt verschlossenem mechanischen Verriegelungsmittel 9 nicht gestartet werden kann.

In **Figur 7b** ist eine Ansicht auf eine erfindungsgemässe Türverriegelung 8 in einer anderen Ausführungsform dargestellt. Das mechanische Verriegelungsmittel 9 weist dabei einen Spannhaken auf, welcher in einer Ausnehmung 14 eine Kante oder einen Bolzen hintergreift oder hintergreifen kann. Der Spannhaken ist an einem Hebel 67 an einer Zugachse 68 befestigt. Die Zugachse 68 ist dabei exzentrisch zur Drehachse 16 des Hebels 67 angeordnet, so dass bei Drehung des Hebels 67 der Spannhaken mittels der Zugachse 68 verschoben werden kann und entsprechend eine Türe in die Schliessposition gezogen werden kann. Des Weiteren ist am Hebel 67 ein Teil eines elektromechanischen Verriegelungsmittels 10 angeordnet, welches mit einem entsprechenden Gegenstück 10' korrespondiert. In der gezeigten Ausführungsform weist derjenige Teil des elektromechanischen Verriegelungsmittels 10, welcher am Hebel 67 angeordnet ist, eine Rastlasche auf, welche im entsprechenden Gegenstück 10' automatisch verrastet. Das Gegenstück 10' ist entsprechen ausgebildet, so dass beim Zusammenführen das Verriegelungsmittel 10 automatisch mechanisch verriegelt. Erst durch anlegen einer Signalspannung kann ein im Gegenstück 10' angeordneter Elektromagnet die mechanische Verriegelung lösen und den Hebel 67 freigeben.

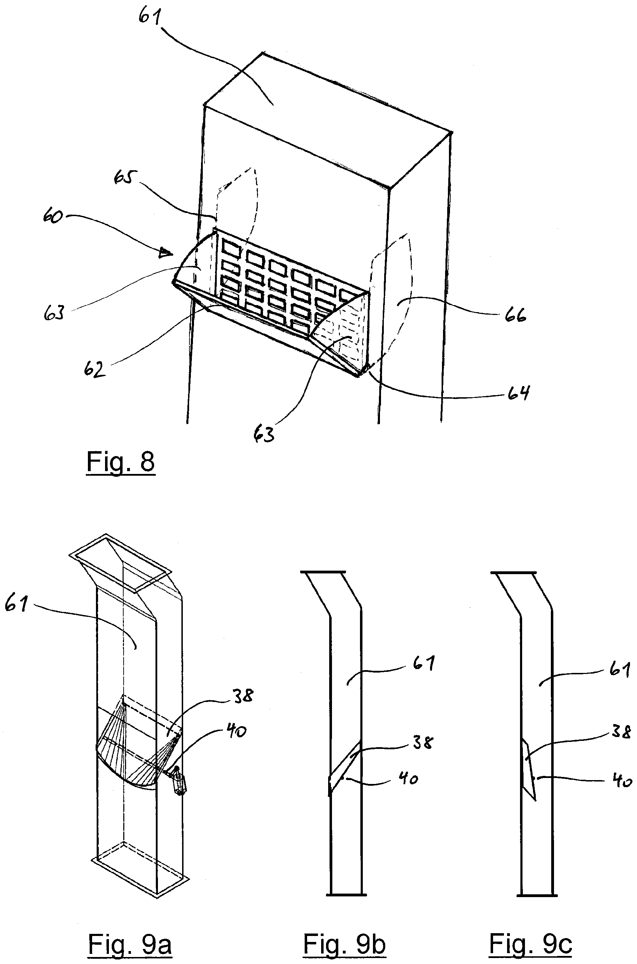

In **Figur 8** ist eine Detailansicht auf einen Zuführungskanal 61 mit Fokus auf eine Inspektionsklappe 60 dargestellt. Das zu pelletierende Material wird durch den Zuführungskanal 61 von einem der Pelletpresse 1 (siehe Figur 4) vorgelagerten Prozess der Pelletpresse 1 zugeführt. Um die Qualität des zugeführten Materials zu überprüfen ist in diesem Zuführungskanal 61 eine Inspektionsklappe 60 vorhanden. Diese Inspektionsklappe 60 erlaubt den Zugang zu einer Öffnung im Zuführungskanal 61, wobei die Öffnung aus Sicherheitsgründen mit einem groben Gitter verschlossen ist, welches sicherstellt, dass für das Bedienpersonal keine Verletzungsgefahr durch Hineingreifen in den Zuführungskanal 61 besteht. Die Inspektionsklappe 60 weist im Wesentlichen eine Frontabdeckung 62 und zwei Seitenbleche 63 auf, welche in entsprechend ausgestaltete Schlitze oder direkt in die Öffnung des Zuführungskanals 61 eingesetzt werden können. Diese Seitenbleche 63 weisen auf ihrer bestimmungsgemässen unteren Seite nahe an der Frontabdeckung 62 eine Einkerbung 64 auf, welche als Scharnier für die Inspektionsklappe 60 dient. Um beim Öffnen der Inspektionsklappe 60 ein Herauskippen der Inspektionsklappe 60 zu verhindern, weisen die Seitenbleche 63 einen Anschlag 65 auf, welcher in der gezeigten Ausführungsform durch vergrösserte Seitenblechlappen 66 gebildet wird. Das Gewicht bzw. die Dimension der beiden Seitenblechlappen 66 ist dabei so gewählt, dass die Inspektionsklappe 60 nach dem Öffnen automatisch wieder geschlossen wird. Somit kann auf einfache Weise sichergestellt werden, dass im Betrieb durch die Öffnung im Zuführungskanal 61 für die Inspektionsklappe 60 kein Material, insbesondere Staub unnötig ausgetragen oder das zu pelletierende Material durch Fremdstoffe verschmutzt wird.

**Figur 9a** zeigt eine Ansicht einer erfindungsgemässen Zuführungsrutsche 38 angeordnet in einem Zuführungskanal 61 einer Pelletpresse 1 (siehe Figur 4). Die Zuführungsrutsche 38 ist dabei in einer ersten Position so angeordnet, dass das zu pelletierende Material, wie schon zu Figur 6a und 6b erwähnt, fokussiert und gezielt in den Pressenvorraum 39 (siehe Figur 3) einer Pelletpresse 1 eingebracht werden kann. In der gezeigten Ausführungsform wird der Zuführungskanal 61 nicht nur bis zum Pressenvorraum 39 geführt sondern ist daran vorbei weiter gezogen. Die Zuführungsrutsch 38 ist dabei an einem Drehgelenk 40 angeordnet, welches die Zuführungsrutsche 38 aus einer ersten Position wie oben beschrieben in eine Bypass-Position (siehe Figur 9c) verschwenken lässt. In dieser Bypass-Position wird das zu pelletierende Material nicht in den Pressenvorraum 39 geleitet sondern kann über den weitergeführten Zuführungskanal 61 an der Pelletpresse vorbei geleitet werden. Die Zuführungsrutsche 38 und das Drehgelenk 40 sind dabei so ausgestaltet bzw. angeordnet, dass die Zuführungsrutsche 38 in der Bypass-Position die Öffnung zum Pressenvorraum 39 komplett verschliesst oder mindestens so verschliesst, dass das Material aus dem Zuführungskanal 61 möglichst ungehindert an dieser Öffnung vorbei geleitet wird. Eine solche Bypass-Schaltung ist insbesondere dann vorteilhaft, wenn es sich bei dem der Pelletpresse vorgelagerten Prozess um einen kontinuierlichen Prozess handelt, und die Pelletpresse beispielsweise zur Behebung von Problemen oder für Servicezwecke aus dem Materialfluss entkoppelt werden muss.

Die Figuren 9b und 9c zeigen einen Querschnitt durch den Zuführungskanal 61 gemäss der Figur 9a. Dabei ist in der **Figur 9b** die Zuführungsrutsche 38 in der ersten Position dargestellt, in der das zu pelletierende Material in den Pressenvorraum 39 (siehe Figur 3) geleitet wird. Das Drehgelenk 40 ist angedeutet. In der **Figur 9c** ist die Zuführungsrutsche 38 um das Drehgelenk 40 verschwenkt und befindet sich in der Bypass-Position. Das Material aus den Zuführungskanal 61 wird an der Pelletpresse vorbei geführt.

**Figur 10** zeigt eine Ansicht auf eine Pressentüre 20 einer Pelletpresse. Üblicherweise wird im Betrieb einer Pelletpresse, insbesondere bei kühler Umgebungsluft, ein Kondensat an der tendenziell kühlen Pressentüre 20 gebildet. Ein solches Kondensat fördert das Anhaften von Staubpartikeln, welche im Innern der Pelletpresse vorhanden sind. Über längere Zeit kann sich so eine starke Verschmutzung der Pelletpresse aufbauen, welche im schlimmsten Fall die korrekte Funktion der Pelletpresse verhindern. Es hat sich gezeigt, dass diese Kondensatbildung einfach verhindert werden kann, wenn die Pressentüre 20 geheizt wird. Zu diesem Zweck sind auf der Pressentüre 20 Heizmatten 48 angeordnet, welche die Pressentüre 20 auf eine beliebig einstellbare Temperatur erwärmen. Da sich erfahrungsgemäss auch im Zuführungskanal 61 Kondensat bildet, kann auch der Zuführungskanal 61 entsprechend mit Heizmatten 48 oder anderen Heizelementen versehen werden, um die Kondensatbildung effektiv zu verhindern.

In den **Figuren 11a und 11b** ist ein erfindungsgemässes Schneidmesser 55 dargestellt, welche von Messerhaltern 59 (siehe Figur 4) über die Aussenseite der Pressform 21 (siehe Figur 4) geführt werden. Das Messer 55 weist eine Messerbasis 56 und beidseitig Klingen 57, 57' auf, welche mit ihrer Schneidkante die Pellets beim Austreten aus der Pressform abschneiden oder abbrechen. Da es im Betrieb schwierig ist, den Verschleiss solcher Messer 55, insbesondere deren Klinge 57, 57' zu beurteilen, weisen die gezeigten Messer 55 an jeder Klinge 57, 57' einen Verschleissindikator 58, 58' auf. Sobald die Abnutzung beispielsweise der ersten Klinge 57 bis zum Verschleissindikator 58 fortgeschritten ist, muss das Messer 55 ersetzt oder gewendet werden, so dass die zweite Klinge 57' mit ihrer Schneidekante zum Einsatz kommt. Der Verschleissindikator 58, 58' wird durch einen stumpfen Winkel α von 140° zwischen Klinge 57, 57' und Messerbasis 56 gebildet. In Figur 11b ist zusätzlich noch ein Messerhalter 59 angedeutet, welcher eine Befestigung des Messers 55 an der Pelletpresse 1 (siehe Figur 4) erlaubt.

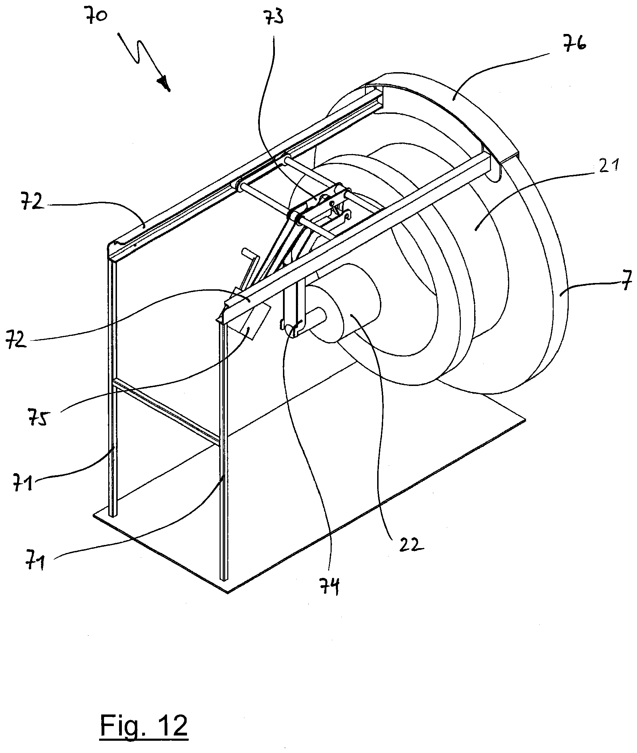

**Figur 12** zeigt eine Ansicht einer erfindungsgemässen Vorrichtung 70 zum Rollen- und Formwechsel einer Pelletpresse. Von der Pelletpresse ist jedoch nur die Frontplatte 7 sowie die Pressform 21 dargestellt. Eine Pressrolle 22 ist angedeutet. Die Vorrichtung 70 umfasst zwei Stützelemente 71, zwei Träger 72 und eine Abstützung 76, welche direkt auf der Frontplatte 7 der Pelletpresse angebracht werden kann. Auf den beiden Trägern 72 ist eine Laufkatze 73 angeordnet, welche eine Lastaufnahme 74 über einen Kettenzug 75 trägt. Die Lastaufnahme 74 kann mit entsprechenden Adaptern ausgerüstet werden, so dass diese Lastaufnahme 74 sowohl die Pressform 21 als auch die Pressrollen 22 aufnehmen kann. Durch die einfache Konstruktion der Vorrichtung 70 kann ein und dieselbe Vorrichtung 70 an mehreren Pelletpressen verwendet werden. Es versteht sich von selbst, dass die Vorrichtung 70 auch an anderen Maschinen eingesetzt werden kann, wenn beispielsweise die Abstützung 76 entsprechend ausgetauscht wird.

## Patentansprüche

1. Pelletpresse (1) mit einem Motor (3) mit einem Motorgehäuse (31) und einem darin drehbar angeordneten Rotor (32), wobei der Rotor (32) als Hohlwelle ausgebildet ist, einem Presswerk (2) mit einer Pressform (21) und in dieser Pressform (21) angeordnete Pressvorrichtungen (22), welche an einer stationären Welle (4) befestigt sind, wobei die stationäre Welle (4) im als Hohlwelle ausgebildeten Rotor (32) angeordnet ist, und einem mit der Pressform (21) wirkverbundenen Formhalter (25), wobei der Formhalter (25) und der Rotor (32) mittels eines Verbindungsmittels so miteinander verbunden sind, dass eine Übertragung eines Drehmomentes des Rotors (32) auf den Formhalter (25) gewährleistet ist, **dadurch gekennzeichnet, dass** das Verbindungsmittel eine Wellen-Naben-Verbindung ist und dass der als Hohlwelle ausgebildete Rotor (32) in Längsrichtung an seinem Ende eine Zahnung (17) aufweist, und dass der Formhalter (25) eine Nabe aufweist, die eine zur Zahnung (17) des Rotors (32) komplementäre Zahnung (18) aufweist, wobei der Formhalter (25) auf den Rotor (32) aufgeschoben werden kann und eine Passverzahnung gebildet wird, derart, dass eine Übertragung eines Drehmomentes des Rotors (32) auf den Formhalter (25) gewährleistet ist.

2. Pelletpresse (1) nach Anspruch 1, **dadurch gekennzeichnet, dass** die Passverzahnung Keilflanken, Kerbflanken oder Evolventenflanken, vorzugsweise Evolventenflanken aufweist.

3. Pelletpresse (1) nach Anspruch 1 oder 2, mit einem das Presswerk (2) und/oder den Motor (3) abdeckenden Schutzgehäuse (19), wobei das Presswerk (2) rotierend ausgestaltet ist, **dadurch gekennzeichnet, dass** das Schutzgehäuse (19) eine Pressentüre (20) in Form einer Schiebetüre aufweist.

4. Pelletpresse (1) gemäss einem der Ansprüche 1 bis 3, mit einem Zuführungskanal (61), wobei im Zuführungskanal (61) eine Inspektionsklappe (60) angeordnet ist, welche eine Frontabdeckung (62) und zwei Seitenbleche (63) umfasst und in entsprechend ausgestaltete Schlitze des Zuführungskanals (61) einsetzbar sind, **dadurch gekennzeichnet, dass** die Seitenbleche (63) Seitenblechlappen (66) aufweisen, welche ein Herausfallen der Inspektionsklappe (60) verhindern und ein Gewicht aufweisen, welches ein selbstständiges Verschliessen der Inspektionsklappe (60) bewirken.

5. Pelletpresse (1)nach Anspruch 3, wobei die Pressform (21) in einem Pressraum angeordnet ist, mit Pressrollen (22), wobei der Motor (3) vom Schutzgehäuse (19) umschlossen ist, **dadurch gekennzeichnet, dass** der Druck im Schutzgehäuse (19) grösser als der atmosphärische Druck der Umgebung, insbesondere grösser als der Druck im Pressraum der Pelletpresse (1) ist.

6. Verfahren zur Sicherheitsabschaltung eines elektrischen Schaltkreises (50) einer Pelletpresse (1) gemäss einem der Ansprüche 1 bis 5, **umfassend** die folgenden sequenziellen Schritte:
a) detektieren einer Bewegung einer im Normalbetrieb stationären Welle (4) einer Pelletpresse (1),
b) Potentialfrei-Schalten einer elektrischen Verbindung (51) zwischen der stationären Welle (4) und der Pelletpresse (1),
c) Trennen der elektrischen Verbindung (51).

7. Pelletpresse (1) gemäss einem der Ansprüche 1 bis 5 mit einer Anordnung zur Sicherheitsabschaltung eines elektrischen Schaltkreises (50), **umfassend** einen Detektor (54) zum detektieren einer Bewegung einer im Normalbetrieb stationären Welle (4) der Maschine (1), ein Mittel (6) zum Potentialfrei-Schalten einer elektrischen Verbindung (51) zwischen der stationären Welle (4) und der Maschine (1), und eine Vorrichtung zum Trennen der elektrischen Verbindung (51), wobei die Vorrichtung so ausgestaltet ist, dass die elektrische Verbindung (51) erst nach dem Potentialfrei-Schalten trennbar ist.

8. Pelletpresse (1) gemäss einem der Ansprüche 1 bis 5 mit einer Zuführungsrutsche (38) für die Zuführung von zu pelletierendem Material in einen Pressenvorraum (39) der Pelletpresse (1), **dadurch gekennzeichnet, dass** die Zuführungsrutsche (38) bei bestimmungsgemässem Gebrauch insbesondere im Endbereich der Zuführungsrutsche (38) eine Wölbung quer zur Rutschrichtung des zu pelletierenden Material oder einen Knick in etwa der Mitte des Produktflusses entlang der Rutschrichtung aufweist.

9. Pelletpresse (1) gemäss einem der Ansprüche 1 bis 5 oder 8 mit einer Zuführungsrutsche (38) für die Zuführung von zu pelletierendem Material durch eine Öffnung in einen Pressenvorraum (39) der Pelletpresse (1), wobei die Zuführungsrutsche (38) in einem Zuführungskanal (61) der Pelletpresse (1) angeordnet ist, wobei die Zuführungsrutsche (38) an einem Drehgelenk (40) angeordnet ist, so dass die Zuführungsrutsche (38) aus einer ersten Position in eine Bypass-Position verschwenkbar ist und die Zuführungsrutsche (38) in der Bypass-Position die Öffnung so verschliesst, dass das Material aus dem Zuführungskanal (61) an dieser Öffnung vorbei geleitet wird, **dadurch gekennzeichnet, dass** das Drehgelenk (40) im mittleren Drittel der Zuführungsrutsche (38) angeordnet ist.

10. Pelletpresse (1) gemäss einem der Ansprüche 1 bis 5, mit einem Motor (3), einer Welle (32) und einer Türverriegelung (8), wobei die Türverriegelung (8) ein mechanisches Verriegelungsmittel (9) und ein elektromechanisches Verriegelungsmittel (10) umfasst, **dadurch gekennzeichnet, dass** das mechanische Verriegelungsmittel (9) durch das elektromechanische Verriegelungsmittel (10) gesperrt ist, solange sich die Welle (32) des Motors (4) der Pelletpresse (1) dreht.

11. Pelletpresse (1) nach Anspruch 10, **dadurch gekennzeichnet, dass** der Motor (4) der Pelletpresse (1) gesperrt ist, solange das mechanische Verriegelungsmittel (9) noch offen ist oder nicht durch das elektromechanische Verriegelungsmittel (10) gesperrt ist.

12. Pelletpresse (1) gemäss einem der Ansprüche 1 bis 5 mit einem Schneidmesser (55), wobei das Schneidmesser (55) eine Messerbasis (56) und mindestens eine Klinge (57, 57') mit einer Schneidkante aufweist, **dadurch gekennzeichnet, dass** die Klinge (57, 57') einen Verschleissindikator (58, 58') aufweist, welcher den Verschleiss der Klinge (57, 57') anzeigt.

13. Pelletpresse (1) gemäss einem der Ansprüche 1 bis 5 mit einer Vorrichtung (70) zum Rollen- und Formwechsel, wobei die Vorrichtung (70) wenigstens einen Träger (72) mit einer Laufkatze (73) und wenigstens ein Stützelement (71) zum Abstützen am Boden aufweist, **dadurch gekennzeichnet, dass** der Träger (72) auf der einen Seite auf dem Stützelement (71) und auf der anderen Seite mittels einer Abstützung (76) direkt auf der Pelletpresse (1) befestigt oder befestigbar ist.

## Claims

1. Pellet press (1) having a motor (3) having a motor housing (31) and a rotor (32) which is disposed so as to be rotatable within said motor housing (31), wherein the rotor (32) is configured as a hollow shaft; a press unit (2) having a press mould (21) and pressing devices (22) which are disposed in said press mould (21) and which are fastened to a stationary shaft (4), wherein the stationary shaft (4) is disposed in the rotor (32) that is configured as a hollow shaft; and having a mould holder (25) which is operatively connected to the press mould (21), wherein the mould holder (25) and the rotor (32) by means of a connection means are connected to one another such that a transmission of a torque of the rotor (32) to the mould holder (25) is guaranteed,
**characterized in that**
the connection means is a shaft-to-hub connection, and **in that** the rotor (32) that is configured as a hollow shaft at the end thereof in the longitudinal direction has a toothing (17), and **in that** the mould holder (25) has a hub which has a toothing (18) that is complementary to the toothing (17) of the rotor (32), wherein the mould holder (25) can be push-fitted onto the rotor (32) and a splined connection is formed in such a manner that a transmission of a torque of the rotor (32) to the mould holder (25) is guaranteed.

2. Pellet press (1) according to Claim 1, **characterized in that**
the splined connection has straight-sided flanks, serration flanks, or involute flanks, preferably involute flanks.

3. Pellet press (1) according to Claim 1 or 2, having a protective housing (19) that covers the press unit (2) and/or the motor (3), wherein the press unit (2) is designed so as to rotate, **characterized in that**
the protective housing (19) has a press door (20) in the form of a sliding door.

4. Pellet press (1) according to one of Claims 1 to 3, having a supply duct (61), wherein an inspection flap (60) which comprises a front cover (62) and two side panels (63) and are insertable into correspondingly designed slots of the supply duct (61) is disposed in the supply duct (61), **characterized in that**
the side panels (63) have side panel plates (66) which prevent the inspection flap (60) falling out and have a weight which cause a self-acting closing of the inspection flap (60).

5. Pellet press (1) according to Claim 3, wherein the press mould (21) is disposed in a pressing chamber, having pressing rollers (22), wherein the motor (3) is enclosed by the protective housing (19), **characterized in that**
the pressure in the protective housing (19) is greater than the atmospheric pressure of the environment, in particular greater than the pressure in the pressing chamber of the pellet press (1).

6. Method for the safety-related shutting down of an electrical circuit (50) of a pellet press (1) according to one of Claims 1 to 5,
**comprising**
the following sequential steps:
a) detecting a movement of a shaft (4) of a pellet press (1), said shaft (4) being stationary in the normal operation;
b) switching an electrical connection (51) between the stationary shaft (4) and the pellet press (1) so as to be potential-free;
c) cutting the electrical connection (51).

7. Pellet press (1) according to one of Claims 1 to 5, having an assembly for the safety-related shutting down of an electrical circuit (50), **comprising**
a detector (54) for detecting a movement of a shaft (4) of the machine (1), said shaft (4) being stationary in the normal operation; a means (6) for switching an electrical connection (51) between the stationary shaft (4) and the machine (1) so as to be potential-free; and a device for cutting the electrical connection (51), wherein the device is designed such that the electrical connection (51) is capable of being cut only after the switching so as to be potential-free.

8. Pellet press (1) according to one of Claims 1 to 5, having a supply chute (38) for the supply of material to be pelletized into a press antechamber (39) of the pellet press (1),
**characterized in that**
the supply chute (38) in the intended use, in particular in the end region of the supply chute (38) has a curvature transverse to the sliding direction of the material to be pelletized, or a kink approximately in the centre of the product flow along the sliding direction.

9. Pellet press (1) according to one of Claims 1 to 5, or 8, having a supply chute (38) for the supply of material to be pelletized through an opening into a press antechamber (39) of the pellet press (1), wherein the supply chute (38) is disposed in a supply duct (61) of the pellet press (1), wherein the supply chute (38) is disposed on a rotary joint (40) such that the supply chute (38) is capable of being pivoted from a first position to a bypass position and the supply chute (38) in the bypass position closes the opening such that the material from the supply duct (61) is directed so as to bypass said opening,
**characterized in that**
the rotary joint (40) is disposed in the centre third of the supply chute (38).

10. Pellet press (1) according to one of Claims 1 to 5, having a motor (3), a shaft (32), and a door locking mechanism (8), wherein the door locking mechanism (8) comprises a mechanical locking means (9) and an electromechanical locking means (10), **characterized in that**
the mechanical locking means (9) is blocked by the electromechanical locking means (10) as long as the shaft (32) of the motor (4) of the pellet press (1) rotates.

11. Pellet press (1) according to Claim 10, **characterized in that**
the motor (4) of the pellet press (1) is blocked as long as the mechanical locking means (9) is still open or is not blocked by the electromechanical locking means (10).

12. Pellet press (1) according to one of Claims 1 to 5, having a cutting knife (55), wherein the cutting knife (55) has a knife base (56) and at least one blade (57, 57') having a cutting edge, **characterized in that**
the blade (57, 57') has a wear indicator (58, 58') which indicates the wear of the blade (57, 57').

13. Pellet press (1) according to one of Claims 1 to 5, having a device (70) for changing the roller and mould, wherein the device (70) has at least one carrier (72) having a traveller (73) and at least one support element (71) for support on the floor, **characterized in that**
the carrier (72) on one side is fastened or is capable of being fastened to the support element (71) and on the other side by means of a support structure (76) is fastened or is capable of being fastened directly to the pellet press (1).

## Revendications

1. Presse à granuler (1) comprenant un moteur (3) doté d'un carter de moteur (31) et d'un rotor (32) disposé de manière rotative dans celui-ci, dans laquelle le rotor (32) est réalisé sous forme d'arbre creux, un mécanisme de pressage (2) doté d'un moule (21) et de dispositifs de pressage (22) disposés dans ce moule (21), lesquels sont fixés à un arbre fixe (4), dans laquelle l'arbre fixe (4) est disposé dans le rotor (32) réalisé sous forme d'arbre creux, et un support de moule (25) relié fonctionnellement au moule (21), dans laquelle le support de moule (25) et le rotor (32) sont reliés l'un à l'autre grâce à un moyen de liaison, de telle sorte qu'une transmission d'un couple du rotor (32) au support de moule (25) soit assurée, **caractérisée en ce que** le moyen de liaison est une liaison arbre-moyeu, **en ce que** le rotor (32) réalisé sous forme d'arbre creux comprend une denture (17) à son extrémité dans la direction longitudinale, et **en ce que** le support de moule (25) comprend un moyeu qui comprend une denture (18) complémentaire à la denture (17) du rotor (32), le support de moule (25) pouvant être enfilé sur le rotor (32) et une cannelure étant formée de telle sorte qu'une transmission d'un couple du rotor (32) au support de moule (25) soit assurée.

2. Presse à granuler (1) selon la revendication 1, **caractérisée en ce que** la cannelure comprend des flancs parallèles, des flancs angulaires ou des flancs en développante, de préférence des flancs en développante.

3. Presse à granuler (1) selon la revendication 1 ou 2, comprenant un carter de protection (19) recouvrant le mécanisme de pressage (2) et/ou le moteur (3), dans laquelle le mécanisme de pressage (2) est réalisé de manière rotative, **caractérisée en ce que** le carter de protection (19) comprend une porte de presse (20) sous la forme d'une porte coulissante.

4. Presse à granuler (1) selon l'une des revendications 1 à 3, comprenant un canal d'acheminement (61), dans laquelle un volet d'inspection (60) est disposé dans le canal d'acheminement (61), lequel volet d'inspection comporte un recouvrement avant (62) et deux tôles latérales (63) et peuvent être insérées dans des fentes du canal d'acheminement (61) réalisées de manière correspondante, **caractérisée en ce que** les tôles latérales (63) comprennent des languettes (66) de tôle latérale, lesquelles empêchent le volet d'inspection (60) de tomber et présentent un poids qui provoquent une fermeture indépendante du volet d'inspection (60).

5. Presse à granuler (1) selon la revendication 3, dans laquelle le moule (21) est disposé dans une chambre de pressage, avec des cylindres de pressage (22), dans laquelle le moteur (3) est entouré par le carter de protection (19), **caractérisée en ce que** la pression dans le carter de protection (19) est supérieure à la pression atmosphérique de l'environnement, en particulier est supérieure à la pression dans la chambre de pressage de la presse à granuler (1).

6. Procédé de coupure de sécurité d'un circuit électrique (50) d'une presse à granuler (1) selon l'une des revendications 1 à 5, comportant les étapes séquentielles suivantes :
a) détection d'un mouvement d'un arbre (4) fixe en fonctionnement normal d'une presse à granuler (1),
b) mise hors tension d'une connexion électrique (51) entre l'arbre fixe (4) et la presse à granuler (1),
c) déconnexion de la connexion électrique (51).

7. Presse à granuler (1) selon l'une des revendications 1 à 5, comprenant un ensemble de coupure de sécurité d'un circuit électrique (50), comportant un détecteur (54) servant à détecter un mouvement d'un arbre (4) fixe en fonctionnement normal de la machine (1), un moyen (6) de mise hors tension d'une connexion électrique (51) entre l'arbre fixe (4) et la machine (1), et un dispositif de déconnexion de la connexion électrique (51), dans laquelle le dispositif est réalisé de telle sorte que la connexion électrique (51) ne peut être déconnectée qu'après la mise hors tension.

8. Presse à granuler (1) selon l'une des revendications 1 à 5, comprenant une goulotte d'acheminement (38) pour l'acheminement d'une matière à pelletiser dans une préchambre de pressage (39) de la presse à granuler (1), **caractérisée en ce que** la goulotte d'acheminement (38) présente, lors d'une utilisation correcte, en particulier dans la région d'extrémité de la goulotte d'acheminement (38), un bombement transversal à la direction de glissement de la matière à pelletiser ou un coude approximativement au centre du flux de produit le long de la direction de glissement.

9. Presse à granuler (1) selon l'une des revendications 1 à 5 ou 8, comprenant une goulotte d'acheminement (38) pour l'acheminement d'une matière à pelletiser à travers une ouverture dans une préchambre de pressage (39) de la presse à granuler (1), dans laquelle la goulotte d'acheminement (38) est disposée dans un canal d'acheminement (61) de la presse à granuler (1), dans laquelle la goulotte d'acheminement (38) est disposée sur une articulation rotative (40), de telle sorte que la goulotte d'acheminement (38) puisse être pivotée d'une première position à une position de dérivation et la goulotte d'acheminement (38) fermant l'ouverture dans la position de dérivation, de telle sorte que la matière provenant du canal d'acheminement (61) soit guidée devant cette ouverture, **caractérisée en ce que** l'articulation rotative (40) est disposée dans le tiers central de la goulotte d'acheminement (38).

10. Presse à granuler (1) selon l'une des revendications 1 à 5, comprenant un moteur (3), un arbre (32) et un verrouillage de porte (8), dans laquelle le verrouillage de porte (8) comporte un moyen de verrouillage mécanique (9) et un moyen de verrouillage électromécanique (10), **caractérisée en ce que** le moyen de verrouillage mécanique (9) est bloqué par le moyen de verrouillage électromécanique (10) tant que l'arbre (32) du moteur (4) de la presse à granuler (1) tourne.

11. Presse à granuler (1) selon la revendication 10, **caractérisée en ce que** le moteur (4) de la presse à granuler (1) est bloqué tant que le moyen de verrouillage mécanique (9) est encore ouvert ou n'est pas bloqué par le moyen de verrouillage électromécanique (10).

12. Presse à granuler (1) selon l'une des revendications 1 à 5, comprenant un couteau (55), dans laquelle le couteau (55) comprend une base de couteau (56) et au moins une lame (57, 57') dotée d'une arête de coupe, **caractérisée en ce que** la lame (57, 57') comprend un indicateur d'usure (58, 58'), lequel indique l'usure de la lame (57, 57').

13. Presse à granuler (1) selon l'une des revendications 1 à 5, comprenant un dispositif (70) de changement de cylindres et de moules, dans laquelle le dispositif (70) comprend au moins un support (72) doté d'un chariot roulant (73) et au moins un élément d'appui (71) pour l'appui sur le sol, **caractérisée en ce que** le support (72) est ou peut être fixé sur l'élément d'appui (71) sur l'un des côtés et est ou peut être fixé directement sur la presse à granuler (1) au moyen d'un appui (76) sur l'autre côté.
